# EUROPEAN PATENT APPLICATION

(11) **EP 2 579 155 A1**
(43) Date of publication of application: **10.04.2013**
(21) Application number: 12162569.3
(22) Date of filing: 30.03.2012
(51) Int. Cl.: G06F 11/07

(54) **Portable device, method for making a diagnosis and diagnosis system thereof**

(30) Priority: 04.10.2011 KR 20110100749
(71) Applicant: Samsung Electronics Co., Ltd., Suwon-si, Gyeonggi-do, 443-742 (KR)
(72) Inventor: Bae, Myung-suk, Gyeonggi-do (KR); Rhee, Jong-ho, Seoul (KR)
(74) Representative: Taor, Simon Edward William

(57) **Abstract**

A portable device for diagnosing a diagnosis device, a method for providing a diagnosis service, and a diagnosis system thereof are provided. The portable device includes a setting information collecting unit which collects setting information relating to the diagnosis device which is output from the diagnosis device, a diagnosis device information generating unit which generates diagnosis device information based on the setting information, a communication unit which transmits the diagnosis device information to a server, and a diagnosis result output unit which, if diagnosis result information is received from the server via the communication unit, outputs the received diagnosis result information. Accordingly, an electronic apparatus without a network function may provide a diagnosis service remotely by using a portable device.

## Description

Aspects of the present invention relate to a portable device for diagnosing a diagnosis device, a method for providing a diagnosis service, and a diagnosis system thereof, and more particularly, to a portable device for diagnosing a setting state and a failure state of each of various electronic devices, a method for providing a diagnosis service, and a diagnosis system thereof.

With the development of technology, an electronic apparatus has been capable of providing various functions. For example, a television may provide not only a function of receiving a broadcast transmission, but also various additional functions, such as a function of searching internet web sites and applications.

However, as an electronic apparatus provides an increasing number of various functions, a manner of using the electronic apparatus has become more complicated, and the electronic apparatus has often become subject to failure due to various reasons. In particular, if the setting state of an electronic apparatus has changed due to a mistake caused by a user, it may be difficult for the user to change the setting state back to the normal state because of the complicated manner of using the apparatus. In addition, a user may not notice that an electronic apparatus is out of order, because of a potentially large number of possible reasons that can cause the apparatus to become out of order.

Further, if there is no network connection in an electronic apparatus, it is impossible to transmit a setting state and a failure state of an electronic apparatus to an external server. In such a situation, a user may not be able to determine how to fix the electronic apparatus.

Therefore, a method for diagnosing an electronic apparatus which lacks a network connection is required.

Aspects of the present inventive concept relate to a portable device which collects setting information relating to a diagnosis device which is outputted from the diagnosis device, generates diagnosis device information based on the collected setting information, transmits the generated diagnosis device information to a server, and outputs information relating to a diagnosis result once the diagnosis result is received from the server, a method for providing a diagnosis service, and a diagnosis system thereof.

A portable device for diagnosing a diagnosis device by using an external server, according to an exemplary embodiment, includes: a setting information collecting unit which collects setting information relating to the diagnosis device which is outputted from the diagnosis device, a diagnosis device information generating unit which generates diagnosis device information based on the setting information, a communication unit which transmits the diagnosis device information to the server, and a diagnosis result output unit which, when diagnosis result information is received from the server via the communication unit, outputs the received diagnosis result information.

The diagnosis device information generating unit may generate at least one of a device type, a model name, a product identification number, a setting state, software information, a format type of an outputting of diagnosis result information, and user information which relates to the diagnosis device.

The device may further include an encryption unit which encrypts the generated diagnosis device information.

The diagnosis result information may include at least one of a recommended setting scope, a software upgrade, and problem-solving information relating to the diagnosis device.

The received diagnosis result information may be encrypted, and the diagnosis result information output unit may decode and output the encrypted diagnosis result information.

The diagnosis result information output unit may output the diagnosis result information by performing at least one of the following operations: displaying the diagnosis result information, transmitting a text message which includes the diagnosis result information, and posting the diagnosis result information to of a web page which is accessible via the Internet and/or the use of a Uniform Resource Locator (URL).

The setting information may be encoded by the diagnosis device as one of audio code information and video code information and collected by the setting information collecting unit in an encoded form.

The audio code information may be generated using one of a syllable name of a melody, a rhythm of a melody, and a length of a beep, and the video code information may be generated using one of a number, one or more text characters, a barcode, and a quick response (QR) code.

The communication unit may connect to a service center corresponding to the diagnosis device via telephone after transmitting the diagnosis device information to the server.

The communication unit may receive information relating to the diagnosis device from the server at predetermined intervals after a first occurrence of receiving the diagnosis result information from the server.

A method for providing a diagnosis service for diagnosing a diagnosis device by using an external server, according to an exemplary embodiment, includes collecting setting information relating to the diagnosis device which is outputted from the diagnosis device, generating diagnosis device information based on the collected setting information, transmitting the generated diagnosis device information to the server, and, when diagnosis result information is received from the server, outputting the received diagnosis result information.

The generating the diagnosis device information may include generating at least one of a device type, a model name, a product identification number, a setting state, software information, a format type of an outputting of diagnosis result information, and user information relating to the diagnosis device.

The method may further include encrypting the generated diagnosis device information.

The diagnosis result information received from the server may include at least one of a recommended setting scope, a software upgrade, and problem-solving information relating to the diagnosis device.

The received diagnosis result information may be encrypted, and the outputting the diagnosis result information may further include decoding the encrypted diagnosis result information.

The outputting the diagnosis result information may include outputting the diagnosis result information by at least one of the following: displaying the diagnosis result information, transmitting a text message which includes the diagnosis result information, and posting the diagnosis result information to a web page which is accessible via the Internet.

The setting information may be encoded by the diagnosis device as one of audio code information and video code information and collected in an encoded form.

The audio code information may be generated by using one of a syllable name of a melody, a rhythm of a melody, and a length of a beep, and the video code information may be generated using one of a number, one or more text characters, a barcode, and a QR code.

The method may further include connecting to a service center corresponding to the diagnosis device via telephone after transmitting the diagnosis device information to the server.

The method may further include receiving information relating to the diagnosis device from the server at predetermined intervals after a first occurrence of receiving the diagnosis result information from the server.

A system which provides a diagnosis service of a diagnosis device, according to an exemplary embodiment, includes: a diagnosis device which outputs encoded setting information; a portable device which collects the setting information, generates the diagnosis device information based on the setting information, outputs the generated diagnosis device information to a server, and when diagnosis result information is received from the server, outputs the received diagnosis result information; and a server which, when the diagnosis device information is received from the portable device, generates the diagnosis result information based on the diagnosis device information and transmits the generated diagnosis result information to the portable device.

These and/or other aspects and advantages of the present disclosure will become apparent and more readily appreciated from the following description of the exemplary embodiments, taken in conjunction with the accompanying drawings, of which:
FIG. 1 is a view which illustrates a diagnosis system according to an exemplary embodiment;
FIG. 2 is a block diagram which illustrates a configuration of a diagnosis device according to an exemplary embodiment;
FIG. 3 is a block diagram which illustrates a configuration of a portable device according to an exemplary embodiment;
FIG. 4 is a block diagram which illustrates a configuration of an external server according to an exemplary embodiment;
FIG. 5 is a flowchart which illustrates a method for providing a diagnosis service to be performed by a portable device according to an exemplary embodiment; and
FIG. 6 is a flowchart which illustrates a method for providing a diagnosis service to be performed by a diagnosis system according to an exemplary embodiment.

Reference will now be made in detail to exemplary embodiments, examples of which are illustrated in the accompanying drawings, wherein like reference numerals refer to like elements throughout. The exemplary embodiments are described below, with reference to the figures.

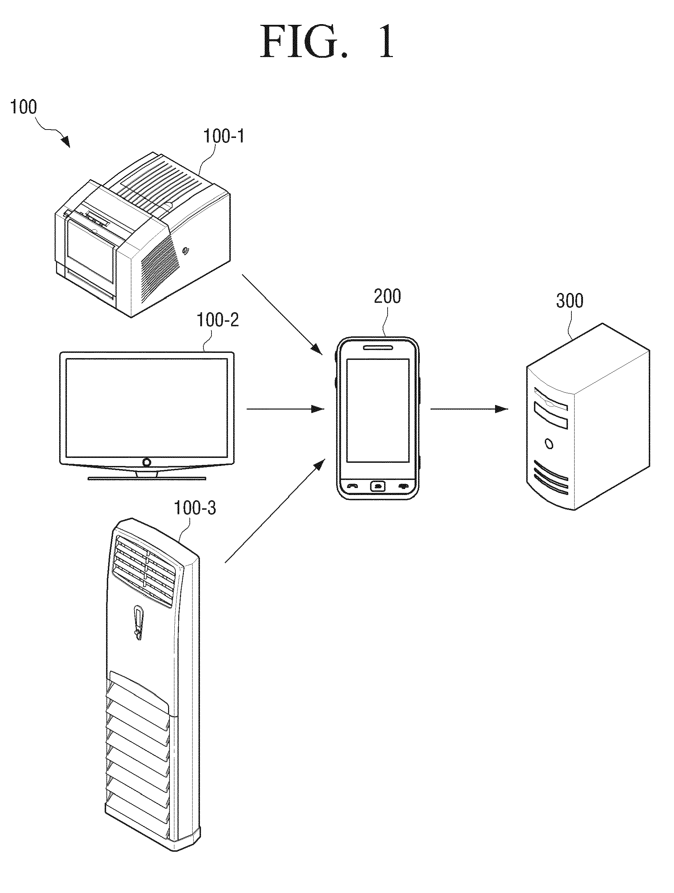

FIG. 1 is a view which illustrates a diagnosis system for diagnosing an electronic apparatus which requires a diagnosis (hereinafter, referred to as "a diagnosis device") due to an operational failure or an operational setting, according to an exemplary embodiment. The apparatus which requires a diagnosis may alternatively be referred to as a "diagnosed device", and the term "diagnosed" may be used instead of "diagnosis" when referring to information or components of the device being diagnosed. As illustrated in FIG. 1, the diagnosis system includes a diagnosis apparatus 100, a portable device 200 and a server 300. In particular, the diagnosis device 100 refers to an electronic apparatus which requires a diagnosis which relates to its setting state and failure state. The diagnosis device 100 may be realized as, for example, a printer 100-1, a television 100-2, or an air conditioner 100-3, but the diagnosis device 100 is not limited thereto.

The diagnosis device 100 generates its own setting information. The setting information may include, for example, information relating to a current setting state, information relating to currently installed software, and information relating to a failure.

In addition, the diagnosis device 100 outputs the setting information as encoded code information, such as, for example, video code information or audio code information. In particular, the video code information may include, for example, a number, one or more text characters, a combination of number and text, a barcode, or a quick response (QR) code, but the video code information is not limited thereto. The audio code information may include, for example, one of a syllable name of a melody, a rhythm of a melody, and a length of a beep.

The portable device 200 collects setting information relating to the diagnosis device 100. In particular, the portable device 200 collects encoded code information which is outputted from the diagnosis device 100. For example, if the diagnosis device 100 outputs video code information, the portable device 200 may collect the encoded video code information by photographing video code information outputted from the diagnosis device 100 by using a camera. If the diagnosis device 100 outputs audio code information, the portable device 200 may collect the encoded audio code information by recording audio code information outputted from the diagnosis device 100 by using a microphone.

The portable device 200 generates information relating to the diagnosis device 100 to be transmitted to the server 300 by using the collected setting information relating to the diagnosis device 100. The information relating to the diagnosis device 100 may include at least one of a device type, a model name, a product identification number, a setting state, software, a format type of an outputting of a diagnosis result, and user information.

Because the information relating to the diagnosis device 100 may include personal information, the portable device 200 encodes the diagnosis device information. The method for encoding the diagnosis device information may be performed by using one of the known data encoding methods. The portable device 200 transmits the encoded diagnosis device information to the external server 300.

If the encoded diagnosis device information is transmitted, the server 300 receives the transmitted diagnosis device information and the server 300 decodes the encoded diagnosis device information.

In addition, the server 300 generates information relating to a diagnosis result by using the transmitted diagnosis device information and pre-stored information relating to a recommended setting. In particular, the information relating to a diagnosis result may include not only information relating to a recommended setting for the diagnosis device 100, but also, for example, new software and/or a method for addressing a failure of the diagnosis device 100.

Because the information relating to a diagnosis result may also include personal information, the server 300 may encrypt the information relating to a diagnosis result, for example, by applying Digital Rights Management (DRM). The server 300 then transmits the encrypted diagnosis result to the portable device 200.

The portable device 200 decodes the encrypted information relating to a diagnosis result which is received from the server 300 and outputs the decoded information. In particular, the portable device 200 may reproduce the information relating to a diagnosis result on a display screen as a still image or a moving image. In addition, the portable device 200 may output the information relating to a diagnosis result in the form of a text message, or as information included within a text message. The portable device 200 may connect to an internet web page at which the information relating to a diagnosis result can be displayed and output the information, for example, by posting the information to the web page.

If the portable device 200 is a remote control device for use in conjunction with the diagnosis device 100, the portable device 200 controls to output the information relating to a diagnosis result with respect to the diagnosis device 100. For example, if the diagnosis device 100 is a television, the portable device 200 may control the television to output the information relating to a diagnosis result on the display screen of the television.

As described above, by diagnosing a diagnosis device which lacks a network connection by using the portable device 200, a user may handle a setting state and a failure state of the diagnosis device more easily and conveniently.

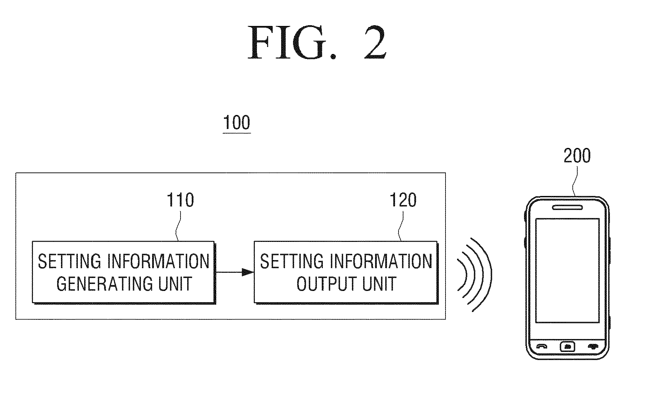

Hereinafter, the diagnosis device 100 of a diagnosis system, the portable device 200 and the server 300 will be described in greater detail with reference to FIGS. 2, 3, and 4.

FIG. 2 is a block diagram which illustrates a configuration of the diagnosis device 100 according to an exemplary embodiment. As illustrated in FIG. 2, the diagnosis device 100 includes a setting information generating unit 110 and a setting information output unit 120.

The setting information generating unit 110 generates setting information relating to the diagnosis device 100. In particular, the setting information relating to the diagnosis device 100 may include, for example, at least one of current setting state information relating to the diagnosis device 100, software currently installed in the diagnosis device 100, and failure state information relating to the diagnosis device 100. For example, if the diagnosis device 100 is a television, the setting information generating unit 110 may generate setting information which includes information relating to a current screen setting and/or an audio setting. If the diagnosis device 100 is a printer, the setting information generating unit 110 may generate setting information which includes information relating to a failure state in a current printer. If the diagnosis device 100 is a navigator, the setting information generating unit 110 may generate setting information which includes information relating to software installed in a current navigator. However, these are only examples, and other information relating to the diagnosis device 100 may be included in the setting information. The setting information generating unit 110 may be embodied as a hardware component, such as, for example, an integrated circuit or dedicated circuitry or a microprocessor, or as a software module which includes a computer-readable medium which stores computer-executable instructions for causing a processor to execute one or more functions.

The setting information output unit 120 outputs setting information generated by the setting information generating unit 110 in the form of an encrypted code. In particular, the setting information output unit 120 may output setting information as video code information or audio code information.

For example, the setting information output unit 120 may output generated setting information by using audio code information such as a syllable name of a melody, a rhythm of a melody, and a length of a beep. In addition, the setting information output unit 120 may output generated setting information by using video code information such as one or more text characters, a number, a barcode, and a QR code.

If setting information is outputted as audio code information, the setting information output unit 120 may be realized as a speaker. If setting information is outputted as video code information, the setting information output unit 120 may be realized as a display.

As described above, the diagnosis device 100 may output setting information as video or audio code information and thus, the diagnosis device 100 may output its own setting information to outside without using a network connection.

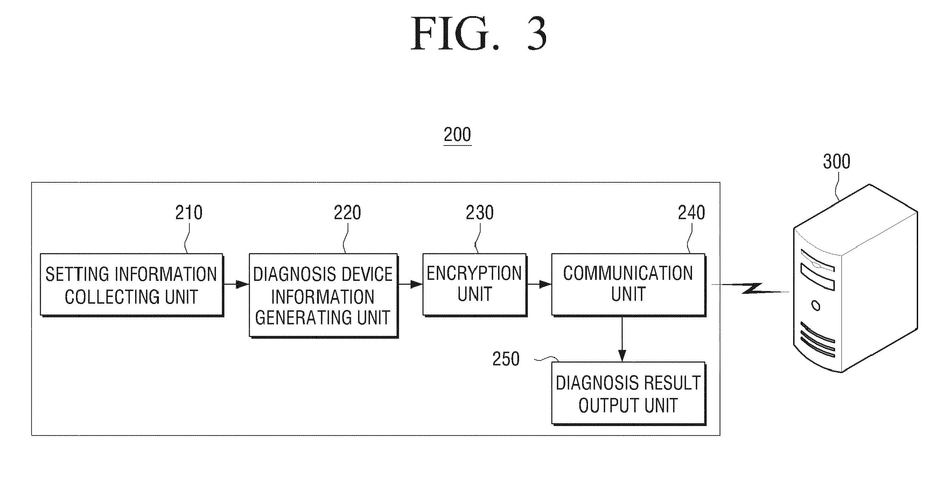

FIG. 3 is a block diagram which illustrates a configuration of the portable device 200 for diagnosing the diagnosis device 100, according to an exemplary embodiment. As illustrated in FIG. 3, the portable device 200 includes a setting information collecting unit 210, a diagnosis device information generating unit 220, an encryption unit 230, a communication unit 240, and a diagnosis result output unit 250. In particular, the portable device 200 may be realized as a mobile phone, but this is only one example. The portable device 200 may be realized not only as mobile phone but also, for example, as a personal computer (PC), a personal digital assistant (PDA), a tablet computing device, or a notebook PC.

The setting information collecting unit 210 collects setting information which is outputted from the diagnosis device 100. In particular, if the setting information is outputted as audio code information, the setting information collecting unit 210 may be realized as a microphone. If the setting information is outputted as video code information, the setting information collecting unit 210 may be realized as a camera.

The diagnosis device information generating unit 220 generates information relating to a diagnosis device based on the collected setting information. In particular, the diagnosis device information may include at least one of a device type, a model name, a product identification number, a setting state, software, a format type of an outputting of a diagnosis result, and user information relating to the diagnosis device 100.

For example, information relating to a diagnosis device may be generated as shown in Table 1 below:

**Table 1**

| Type of diagnosis device | Model name | Product identification number | State information | Type of outputting diagnosis result | Failure state | User information (ID) |
|---|---|---|---|---|---|---|
| Printer | SAMP-1581 | ADJK18A1 | Output speed, output mode | Moving image | Problems of printing quality | USER_1 |
| TV | SAMT-101 | 1023MLAS1 | Brightness, volume, mode, etc. | Web page | - | USER_2 |
| Air conditioner | SAMA-9912 | SJKDKL123 | State of temperature, humidity, and refrigerant | Text message | Aging of filter | USER_3 |

In addition to the information listed in Table 1, the diagnosis device information may further include software information, such as, for example, the name and version of software relating to one or more applications installed in the diagnosis device 100.

After the diagnosis device information has been generated by the diagnosis device information generating unit 220, the encryption unit 230 may encrypt the diagnosis device information, for example, because the diagnosis device information may include not only product information but also personal information relating to a user, or because of general information security considerations. The encryption unit 230 may be embodied as a hardware component, such as, for example, an encoder or an encoder/decoder which uses dedicated circuitry and/or a microprocessor, or as a software module which includes a program for performing an encryption function.

If diagnosis device information is encrypted by the encryption unit 230, the communication unit 240 outputs the encrypted diagnosis device information to the external server 300. Herein, the communication unit 240 may be realized, for example, as a transceiver, a wired Internet module, a wireless Internet module, a Wi-Fi module, or a Bluetooth module, but the communication unit 240 is not limited thereto.

In particular, after transmitting the diagnosis device information to the server 300, the communication unit 240 may connect to a service center corresponding to the diagnosis device, such as, for example, a manufacturer service center relating to the diagnosis device, via a telephone or other form of electronic communication to diagnose the diagnosis device 100 more quickly and easily.

The diagnosis result output unit 240 outputs diagnosis result information which is received from the server 300 so that a user may recognize the result. In particular, the diagnosis result output unit 240 may reproduce diagnosis result information which is outputted from the server 300 as video information (for example, a moving image and/or a still image), as audio information (for example, an announcement) or as a text message. In addition, the diagnosis result output unit 240 may also connect to a web page, such as, for example, a web page of a manufacturer, where diagnosis result information is presented by posting the received diagnosis result information to the web page.

As described above, as information relating to the diagnosis device 100 is processed and transmitted to the external server 300 and the diagnosis result information received from the external server 300 is outputted, a user may diagnose the diagnosis device 100 remotely.

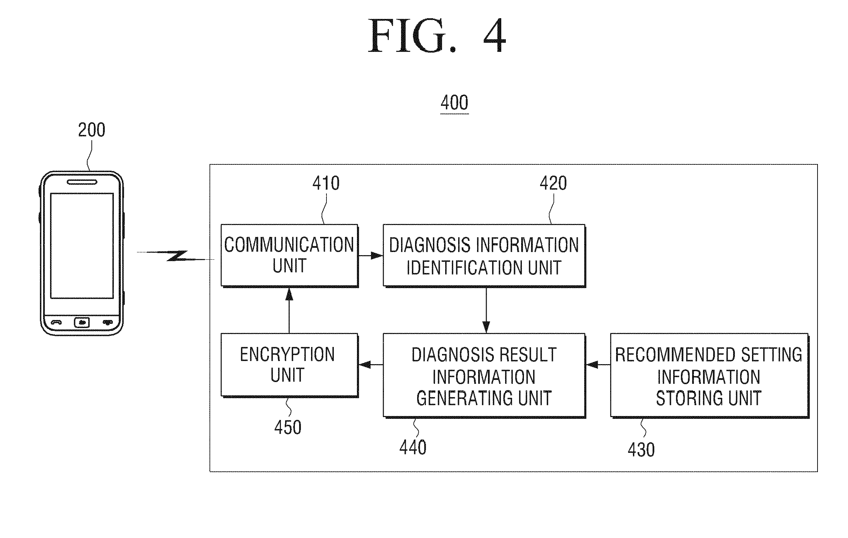

FIG. 4 is a block diagram which illustrates the server 400 of a diagnosis system according to an exemplary embodiment. As illustrated in FIG. 4, the server 400 includes a communication unit 410, a diagnosis device information identification unit 420, a recommended setting information storing unit 430, a diagnosis result information generating unit 440, and an encryption unit 450.

The communication unit 410 receives diagnosis device information from the portable device 200. The communication unit 410 transmits diagnosis result information generated on the basis of the diagnosis device information to the portable device 200. The communication unit 410 may be realized, for example, as a transceiver, a wired Internet module, a wireless Internet module, a Wi-Fi module, or a Bluetooth module, but the communication unit 410 is not limited thereto.

The diagnosis device information identification unit 420 identifies diagnosis device information received from the portable device 200. In particular, the diagnosis device information identification unit 420 decodes encrypted diagnosis device information to identify the diagnosis device information. In an exemplary embodiment, the diagnosis device information identification unit 420 identifies at least one of a device type, a model name, a product identification number, a setting state, software, a format type of an outputting of a diagnosis result, and user information relating to the diagnosis device. The diagnosis device information identification unit 420 may be embodied as a hardware component, such as, for example, an integrated circuit or dedicated circuitry or a microprocessor, or as a software module which includes a computer-readable medium which stores computer-executable instructions for causing a processor to execute one or more functions.

The recommended setting information storing unit 430 may store recommended setting information for each diagnosis device. In particular, the recommended setting information may include, for example, optimal setting conditions, setting conditions at the time of being manufactured, and the latest software version of respective applications which are installed in each diagnosis device. In addition, the recommended setting information storing unit 430 may store information relating to how to fix a failure state of each diagnosis device 100. In an exemplary embodiment, the recommended setting information storing unit 430 may be embodied as a memory or as a computer-readable medium for storing electronic information, such as, for example, a random access memory (RAM), a read-only memory (ROM), or a compact disk - read-only memory (CD-ROM).

In particular, the recommended setting information storing unit 430 may be realized as a separate server from the server 400. If the recommended setting information storing unit 430 is realized as a separate server, the recommended setting information storing unit 430 may provide the server 400 with recommended setting information relating to each diagnosis device.

The diagnosis result information generating unit 440 generates diagnosis result information by using diagnosis device information identified by the diagnosis device information identification unit 420 and the recommended setting information stored in the recommended setting information storing unit 430. In particular, the diagnosis result information may include at least one of a recommended setting scope, new software, and problem-solving information relating to the diagnosis device 100.

For example, the diagnosis result information generating unit 440 may generate diagnosis result information as shown in Table 2 below.

**Table 2**

| | Recommended setting information | | Problem-solving information | Output method |
|---|---|---|---|---|
| Printer | Recommended setting value | Recommended setting scope | | |
| TV | Brightness: 50 Contrast: 50 Volume: 10 | Brightness: 40~60 Contrast: 45~55 Volume: 7~13 | - | URL of web page |
| Printer | Output speed: 30 (sheet/min.) | Output speed: 28-32 (sheet/min.) | Replace toner | Text message |
| Air Conditioner | Temperature: 27 degrees Humidity: 30% | Temperature: 26~28 degrees Humidity: 20~40% | Replace filter | Moving image |

The diagnosis result information may further include, for example, information relating to new software, such as, for example, name and version of software, in addition to the diagnosis result information illustrated in Table 2. For example, if software for an application which is installed in a diagnosis device requires updating (for example, if a navigation map needs to be updated), the diagnosis result information may include newly updated software or information relating to updated software.

The diagnosis result information generating unit 440 generates diagnosis result information in various forms according to a user's request. In particular, the diagnosis result information generating unit 440 may generate diagnosis result information in the form of an image data image (for example, a JPG image or a MPEG-2 image) such as, for example, a moving image and/or a still image. In addition, the diagnosis result information generating unit 440 may generate diagnosis result information in the form of audio data (for example, MP3 data or WAV data) which can be outputted through a speaker. The diagnosis result information generating unit 440 may generate diagnosis result information in the form of a text message (for example, SMS data or MMS data) or in the form of a URL of a web page to which the diagnosis result information has been posted. The diagnosis result information generating unit 440 may be embodied as a hardware component, such as, for example, an integrated circuit or dedicated circuitry or a microprocessor, or as a software module which includes a computer-readable medium which stores computer-executable instructions for causing a processor to execute one or more functions.

The encryption unit 450 encrypts generated diagnosis result information to protect personal information of a user or to provide information security to the diagnosis result information. In particular, the encryption unit 450 may perform encryption by using a DRM technology. The encryption unit 450 may be embodied as a hardware component, such as, for example, an encoder or an encoder/decoder which uses dedicated circuitry and/or a microprocessor, or as a software module which includes a program for performing an encryption function.

As described above, the server 400 generates diagnosis result information by identifying diagnosis device received from the portable device 200 and then transmits the generated diagnosis result information to the portable device 200. Therefore, a service provider may provide a diagnosis service with respect to the diagnosis device remotely.

Further, if the server 400 has ever provided a diagnosis service with respect the diagnosis device 100 at least once, a diagnosis service may be provided regularly, for example, periodically and/or in accordance with predetermined intervals, after a predetermined time period (for example, one month) elapses. For example, the server 400 may provide information regarding a recommendation relating to a time for replacing parts of a diagnosis device and a recommendation relating to a time for upgrading software based on the received diagnosis device information. Accordingly, a user may manage the diagnosis device 100 more effectively.

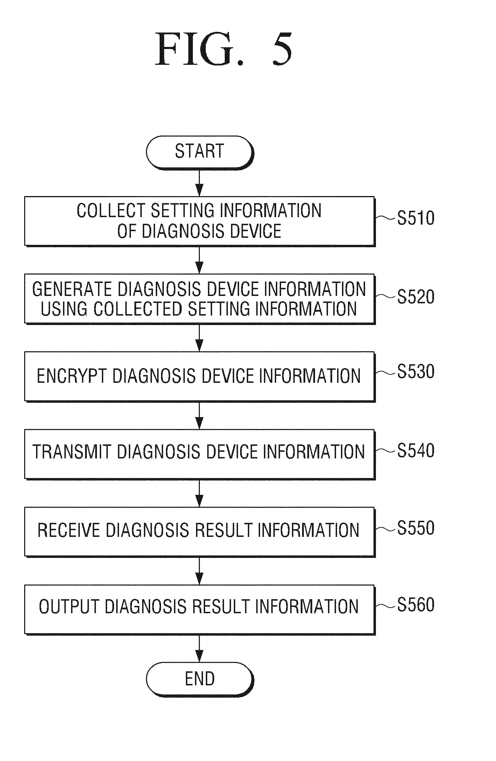

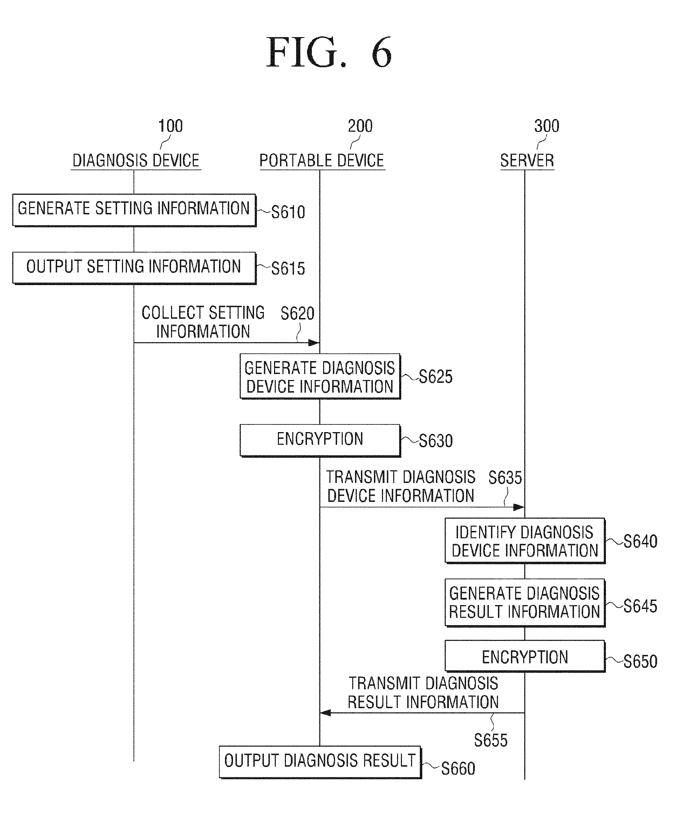

Hereinafter, a method for providing a diagnosis service will be described with reference to FIGS. 5 and 6. FIG. 5 is a flowchart which illustrates a method for providing a diagnosis service to be performed by the portable device 200, according to an exemplary embodiment.

First, in operation S₅₁₀, the portable device 200 collects setting information relating to the diagnosis device 100. In particular, the portable device 200 collects setting information which is outputted as video code information or audio code information from the diagnosis device 100. The setting information may include, for example, a setting state, a failure state, and software information relating to the diagnosis device 100.

In operation S520, the portable device 200 generates diagnosis device information by using the collected setting information. In particular, the generated diagnosis device information may include at least one of a device type, a model name, a product identification number, a setting state, software, a format type of an outputting of a diagnosis result, and user information relating to the diagnosis device 100.

In operation S530, the portable device 200 encrypts the generated diagnosis device information, for example, to protect personal information of a user, or for a reason relating to information security.

In operation S540, the portable device 200 transmits the encrypted diagnosis device information to the external server 300. In particular, the portable device 200 may transmit the diagnosis information to the server 300 by using a communication module such as, for example, a Wi-Fi device or a Bluetooth device.

In operation S550, when the server 300 generates diagnosis result information by using the diagnosis device information and transmits the diagnosis result information to the portable device 200, the portable device 200 receives the diagnosis result information. In particular, the generated diagnosis result information may include at least one of a recommended setting scope, new software, and problem-solving information relating to the diagnosis device.

In operation S560, the portable device 200 outputs the received diagnosis result information. In particular, if the received diagnosis result information is in the form of image data, the portable device 200 may output the diagnosis result information as a moving image or a still image by using a display screen. If the received diagnosis result information is in the form of audio data, the portable device 200 may output the diagnosis result information as a guidance announcement by using a speaker. If the received diagnosis result information is in the form of a text message, the portable device 200 may output the diagnosis result information by using a display screen. If the received diagnosis result information has a URL form, the portable device 200 may output the diagnosis result information by posting the information to a web page and by connecting to the corresponding URL. However, these are only examples, and the received diagnosis result information may be outputted by using other methods.

As described above, the diagnosis device 100 may be diagnosed remotely using the portable device 200. Therefore, a user may control the diagnosis device 100 more conveniently and quickly.

FIG. 6 is a flowchart which illustrates a method for providing a diagnosis service to be performed by a diagnosis system, according to an exemplary embodiment.

First, in operation S610, the diagnosis device 100 generates its own setting information. In particular, the setting information may include information relating to a setting state, a failure state, and/or software relating to the diagnosis device 100.

In operation S615, the diagnosis device 100 outputs the generated setting information. In particular, the diagnosis device 100 may output the setting information as video code information or audio code information. For example, the video code information may include at least one of a number, one or more text characters, a barcode, and a QR code, and the audio code information may include at least one of a syllable name of a melody, a rhythm of a melody, and a length of a beep.

In operation S620, the portable device 200 collects setting information which is outputted from the diagnosis device 100. If the setting information is outputted as video code information, the portable device 200 collects the setting information by using a camera or other suitable device for collecting video data, and if the setting information is outputted as audio code information, the portable device 200 collects the setting information by using a microphone or other suitable device for collecting audio data.

In operation S625, the portable device 200 generates information relating to the diagnosis device by using the collected setting information. In particular, the generated information relating to the diagnosis device 100 may include at least one of a device type, a model name, a product identification number, a setting state, software, a format type of an outputting of a diagnosis result, and user information relating to the diagnosis device 100.

In operation S630, the portable device 200 encrypts the generated information relating to the diagnosis device, as the generated information may include personal information, or information security may be desired.

In operation S635, the portable device 200 transmits the generated information relating to the diagnosis device to the external server 300.

In operation 640, when the diagnosis device information is received by the server 300, the server 300 identifies the diagnosis device information. In particular, the server 300 decodes the encrypted diagnosis device information to identify the diagnosis device information, and then identifies various parts of information which are included in the diagnosis device information.

In operation S645, the server 300 generates diagnosis result information by using the identified diagnosis device information and by using pre-stored recommended setting information, such as, for example, a recommended setting value, a recommended setting scope, problem-solving information, the latest software information, and/or any other relevant information which is pre-stored. In particular, the generated diagnosis result information may include, for example, recommended setting information, problem-solving information, and/or information regarding software to be updated with respect to the diagnosis device 100.

In addition, the server 300 may generate the diagnosis result information in various forms, such as, for example, image data, audio data, text message data, and/or any other suitable data format.

In operation S650, the server 300 encrypts the generated diagnosis result information. In particular, the server 300 may encrypt the diagnosis result information by applying a DRM technology.

Subsequently, in operation S655, the server 300 transmits the encrypted diagnosis result information to the external portable device 200.

In operation S660, when the diagnosis result information is received, the portable device 200 outputs the diagnosis result (S660). In particular, the portable device 200 may output the diagnosis result in various ways based on a format of the received diagnosis result information. For example, if the diagnosis result information is in the form of image data, such as, for example, a moving image or a still image, the portable device 200 may output the diagnosis result by using a display screen.

According to the above-described method, a diagnosis service may be provided by using the portable device 200 and the server 300 with respect to a diagnosis device which requires a diagnosis but lacks a network function.

Although a few exemplary embodiments have been shown and described, it will be appreciated by those skilled in the art that changes may be made with respect to the exemplary embodiments without departing from the principles of the present inventive concept, the scope of which is defined in the claims.

## Claims

1. A portable device for diagnosing a diagnosed device by using an external server, the device comprising:
a setting information collecting unit which collects setting information relating to the diagnosed device which is outputted from the diagnosed device;
a diagnosed device information generating unit which generates diagnosed device information based on the setting information;
a communication unit which transmits the diagnosed device information to the server; and
a diagnosis result output unit which, if diagnosis result information is received from the server via the communication unit, outputs the received diagnosis result information.

2. The device as claimed in claim 1, wherein the diagnosed device information generating unit generates at least one of a device type, a model name, a product identification number, a setting state, software information, a type of outputting diagnosis result information, and user information.

3. The device as claimed in claim 1 or claim 2, further comprising:
an encryption unit which encrypts the generated diagnosed device information.

4. The device as claimed in any one of claim 1 to claim 3, wherein the diagnosis result information includes at least one of a recommended setting scope, a software upgrade, and problem-solving information relating to the diagnosed device.

5. The device as claimed in claim 4, wherein the received diagnosis result information is encrypted, and
wherein the diagnosis result information output unit decodes and outputs the encrypted diagnosis result information.

6. The device as claimed in one of claim 1 to claim 5, wherein the diagnosis result information output unit outputs the diagnosis result information by displaying the diagnosis result information, transmitting a text message which includes the diagnosis result information, or posting the diagnosis result information to a web page.

7. The device as claimed in any one of claim 1 to claim 6, wherein the setting information is encoded by the diagnosed device as one of audio code information and video code information and collected in an encoded form.

8. The device as claimed in claim 7, wherein the audio code information is generated by using one of a syllable name of a melody, a rhythm of a melody, and a length of a beep, and
wherein the video code information is generated by using one of a number, a text, a barcode, and a QR code.

9. The device as claimed in any one of claim 1 to claim 8, wherein the communication unit connects to a service center corresponding to the diagnosed device via telephone after transmitting the diagnosed device information to the server.

10. The device as claimed in claim 1, wherein the communication unit receives information regarding the diagnosed device from the server at predetermined intervals after a first occurrence of receiving the diagnosis result information from the server.

11. A method for providing a diagnosis service for diagnosing a diagnosed device by using an external server, the method comprising:
collecting setting information relating to the diagnosed device which is outputted from the diagnosed device;
generating diagnosed device information based on the setting information;
transmitting the diagnosed device information to the server; and
if diagnosis result information is received from the server, outputting the received diagnosis result information.

12. The method as claimed in claim 11, wherein the generating the diagnosed device information comprises generating at least one of a device type, a model name, a product identification number, a setting state, software information, a type of outputting diagnosed result information, and user information.

13. The method as claimed in claim 11 or claim 12, further comprising:
encrypting the generated diagnosed device information.

14. The method as claimed in one of claim 11 to claim 13, wherein the diagnosis result information received from the server includes at least one of a recommended setting scope, a software upgrade, and problem-solving information relating to the diagnosed device.

15. The method as claimed in claim 14, wherein the diagnosis result information is encrypted, and
wherein the outputting the diagnosis result information further comprises decoding the encrypted diagnosis result information.

## Amended claims

### Amended claims in accordance with Rule 137(2) EPC.

**1.** A portable device (200) for diagnosing a diagnosed device (100) by using an external server (300), the device (200) comprising:
a setting information collecting unit (210) which collects setting information relating to the diagnosed device which is outputted from the diagnosed device;
a diagnosed device information generating unit (220) which generates diagnosed device information based on the setting information;
a communication unit (240) which transmits the diagnosed device information to the server; and
a diagnosis result output unit (250) which, if diagnosis result information is received from the server via the communication unit (240), outputs the received diagnosis result information;
wherein the setting information comprises at least one of current setting state information relating to the diagnosed device, software currently installed in the diagnosed device, and failure state information relating to the diagnosed device.

**2.** The device as claimed in claim 1, wherein the diagnosed device information generating unit (220) generates at least one of a device type, a model name, a product identification number, a setting state, software information, a type of outputting diagnosis result information, and user information.

**3.** The device as claimed in claim 1 or claim 2, further comprising an encryption unit (230) which encrypts the generated diagnosed device information.

**4.** The device as claimed in any one of claim 1 to claim 3, wherein the diagnosis result information includes at least one of a recommended setting scope, a software upgrade, and problem-solving information relating to the diagnosed device.

**5.** The device as claimed in claim 4, wherein the received diagnosis result information is encrypted, and
wherein the diagnosis result information output unit (250) decodes and outputs the encrypted diagnosis result information.

**6.** The device as claimed in one of claim 1 to claim 5, wherein the diagnosis result information output unit (250) outputs the diagnosis result information by displaying the diagnosis result information, transmitting a text message which includes the diagnosis result information, or posting the diagnosis result information to a web page.

**7.** The device as claimed in any one of claim 1 to claim 6, wherein the setting information is encoded by the diagnosed device as one of audio code information and video code information and collected in an encoded form.

**8.** The device as claimed in claim 7, wherein the audio code information is generated by using one of a syllable name of a melody, a rhythm of a melody, and a length of a beep, and
wherein the video code information is generated by using one of a number, a text, a barcode, and a QR code.

**9.** The device as claimed in any one of claim 1 to claim 8, wherein the communication unit (240) connects to a service center corresponding to the diagnosed device via telephone after transmitting the diagnosed device information to the server.

**10.** The device as claimed in claim 1, wherein the communication unit (240) receives information regarding the diagnosed device (100) from the server (300) at predetermined intervals after a first occurrence of receiving the diagnosis result information from the server.

**11.** A method for providing a diagnosis service for diagnosing a diagnosed device (100) by using an external server (300), the method comprising:
collecting setting information relating to the diagnosed device (100) which is outputted from the diagnosed device;
generating diagnosed device information based on the setting information;
transmitting the diagnosed device information to the server (300); and
if diagnosis result information is received from the server, outputting the received diagnosis result information;
wherein the setting information comprises at least one of current setting state information relating to the diagnosed device, software currently installed in the diagnosed device, and failure state information relating to the diagnosed device..

**12.** The method as claimed in claim 11, wherein the generating the diagnosed device information comprises generating at least one of a device type, a model name, a product identification number, a setting state, software information, a type of outputting diagnosed result information, and user information.

**13.** The method as claimed in claim 11 or claim 12, further comprising encrypting the generated diagnosed device information.

**14.** The method as claimed in one of claim 11 to claim 13, wherein the diagnosis result information received from the server includes at least one of a recommended setting scope, a software upgrade, and problem-solving information relating to the diagnosed device.

**15.** The method as claimed in claim 14, wherein the diagnosis result information is encrypted, and
wherein the outputting the diagnosis result information further comprises decoding the encrypted diagnosis result information.
